# EUROPEAN PATENT APPLICATION

(11) **EP 4 333 158 A1**
(43) Date of publication of application: **06.03.2024**
(21) Application number: 22192817.9
(22) Date of filing: 30.08.2022
(51) Int. Cl.: H01M 10/54, H01M 10/44

(54) **TWO-STEP DISCHARGE PROCESS**

(71) Applicant: Northvolt Revolt AB, 112 47 Stockholm (SE)
(72) Inventor: Thorslund, Mikael, 723 56 Västerås (SE); Larsson, Mats, 723 48 Västerås (SE)
(74) Representative: AWA Sweden AB

(57) **Abstract**

The current disclosure relates to processes and systems for discharging of rechargeable battery cells. The processes comprise discharging one or more battery cell using a first discharge method, wherein said first discharge method includes active discharging of the one or more battery cell such as by using a controllable electronic load, and discharging the one or more battery cell using a second discharge method, wherein said second discharge method includes passive discharging of the one or more battery cell such as by using a static resistive load, wherein the second discharge method is performed after the first discharge method.

## Description

### Technical field

The present disclosure relates to processes for discharging of batteries, battery cells, battery modules and packs.

### Background

Through the rapid advancement of electrification in many industries, like the automotive or aviation industry, there is a growing demand for batteries. As batteries have a limited lifetime, there will soon be a rapid increase in used, aged, or end-of-life batteries that have to be disposed of. Considering the significant use of rare minerals for production of batteries, recycling of used-up batteries is indispensable.

Rechargeable or secondary batteries, including battery cells, battery modules and battery packs, find widespread use as electrical power supplies and energy storage systems. In particular in the transportation sector, to achieve the goal of the Intergovernmental Panel on Climate Change (IPCC) to limit global warming to 1.5°C, electric vehicles (EVs) powered by renewable energy have been tapped as the primary means to achieve decarbonization. As a result of the push from policymakers and global awareness, the number of electric vehicles bought and used worldwide will significantly increase in the next years and, as a consequence thereof, also the number of batteries at their end of life will significantly rise considering a typical life span of 10 years.

Batteries include toxic heavy metals and may release harmful gases with global warming potential if improperly disposed. Thus, recycling of batteries is imperative to meeting the IPCC goal. Furthermore, several of the elements used in EV batteries, such as lithium, cobalt, nickel, aluminum, copper and manganese, are valuable, in particularly considering the increasing demand for electric vehicles one the one side, and the scarcity of resources and the difficult mining conditions on the other side. Thus, saving resources, minimizing pollution and lowering cost are also driving factors for the recycling of batteries.

Current battery recycling processes follow a sequence of discharging and/or disassembly, hydro- or pyrometallurgy, metal extraction and product preparation. Hydrometallurgy, which is considered more environmentally friendly than pyrometallurgy, is preceded by crushing the batteries. For safety reasons, discharging of the batteries is crucial, because during the crushing process the anode and cathode materials could meet, thereby causing a short circuit or self-ignition. If the voltage potential between the anode and cathode is high enough,

it could cause thermal runaway, that is, rapid, uncontrolled release of the stored electrical energy, causing the cell to open explosively or to cause a fire.

Due to inherent fire and explosion hazard of for example lithium ion batteries for electric vehicles and other industrial solutions, particularly at their end of life, discharging is an important step in ensuring the safety of the recycling process. Today, electrical discharging of battery packs is largely a manual or semi-automatic process. With the forecasted 3000% increase in lithium ion battery production in the coming decade, it is estimated that 1.16 million electric vehicle batteries will be at their end of life in Europe by 2030. Therefore, it is increasingly important that a safe and rapid automated process be industrialized.

Accordingly, enhanced methods for discharging batteries to be recycled is needed.

### Summary

An object of the present disclosure is to provide new processes which seek to mitigate, alleviate, or eliminate the above-identified deficiencies in the art and disadvantages singly or in any combination. This object is obtained by a process for discharging of one or more rechargeable battery cell to be recycled, the method comprising discharging one or more battery cell using a first discharge method, wherein said first discharge method includes active discharging of the one or more battery cell; an discharging the one or more battery cell using a second discharge method, wherein said second discharge method includes passive discharging of the one or more battery cell, wherein the second discharge method is performed after the first discharge method.

In some aspects, the first discharge method includes subjecting the one or more battery cell to external influence to actively discharge the one or more battery cell, wherein subjecting the one or more battery cell to external influence may include subjecting the one or more battery cell to a discharge current. In some embodiments, the first discharge method removes energy from the one or more battery cell, which energy is recovered using an AC/DC inverter or DC/DC converter.

In some aspects, the process further comprises repeatedly or continuously monitoring a status of a battery including the one or more battery cell through one or more sensors by determining one or more status parameters, wherein monitoring the status of the battery may include determining one or more status parameters, including determining at least one of output voltage, output voltage change rate, temperature, temperature change rate, shape of the battery, and/or emission behavior of the battery, and wherein monitoring the status of the battery may include determining an age and/or charge level of the battery from the output voltage, output voltage change rate, temperature, and/or temperature change rate of the battery.

In some aspects, discharging the one or more battery cell using a first discharge method comprises applying an initial discharge current to the one or more battery cell, repeatedly monitoring the status of the battery through one or more sensors by determining one or more status parameters, repeatedly comparing the one or more status parameters to threshold values to determine the status of the battery. In some aspects, the status may be determined to determine the risk of thermal runaway. On condition that the monitored battery status determines the risk of thermal runaway as low, the discharge process is continued with the present discharge current, on condition that the monitored battery status determines the risk of thermal runaway as moderate, i.e. not imminent but could become so if proceeding with the current parameters, the discharge current is reduced, and on condition that the monitored battery status determines the risk of thermal runaway as high, the discharge current is disabled.

In some aspects, the second discharge method includes two separate sub steps, wherein the first sub step includes discharging the one or more battery cell through a static resistor by applying a resistance to the one or more battery cell in the form of a resistive load, and the second sub step includes short circuiting the one or more battery cell.

In some aspects, the process further comprises terminating the discharging of one or more battery cell according to the first discharge method, wherein the discharging is terminated once the one or more battery cell has reached a first voltage threshold and/or a first estimated discharge time has passed, and terminating the discharging of one or more battery cell according to the second discharge method, wherein the discharging is terminated once the one or more battery cell has reached a second voltage threshold and/or a second estimated discharge time has passed. The first voltage threshold may correspond to a state of charge (SOC) of 0% in the one or more battery cell, and the second voltage threshold may correspond to a cell voltage of about 0 V, such as in the range of 0 V to 0,5 V, of the one or more battery cell.

In some aspects, a system is provided for discharging of one or more rechargeable battery cell to be recycled, comprising one or more battery containers, one or more resistive containers, one or more battery discharging means and one or more control unit, wherein the control unit is configured to control the battery discharging means to execute the discharging process above for one or more battery cell provided to the system. In some embodiments, the system further comprises one or more sensors for monitoring a status of a battery comprising the one or more battery cell. The control unit may comprise processing circuitry and a memory device connected to the processing circuitry, and may further comprise battery identification means. In some embodiments, the system comprises a database connected to the control unit, the database storing characterizing data of one or more battery types to be provided to the system

In some aspects, a computer program product is provided, comprising a set of machine-readable instructions stored on a volatile or non-volatile medium, which, when read and subsequently executed by a processing circuitry of the system above, cause the system to execute the process above.

Other objects and advantages will become apparent to those skilled in the art from a review of the ensuing detailed description, which proceeds with reference to the following illustrative drawings, and the attendant claims. The steps of any process disclosed herein do not have to be performed in the exact order disclosed, unless explicitly stated.

### Brief description of the drawings

The above and other aspects of the present invention will now be described in more detail, with reference to the appended figures. The figures are not necessarily to scale, and generally only show parts that are necessary in order to elucidate the inventive concept, wherein other parts may be omitted or merely suggested.
Figure 1 shows a battery;
Figure 2 shows a system for discharging a battery;
Figure 3 illustrates a system including a plurality of containers;
Figure 4 illustrates an example discharge sequence;
Figure 5 shows a schematic illustration of a Battery Container of the present invention;
Figure 6 shows a flowchart of a process according to the present disclosure;
Figure 7 shows a flowchart of a further detailed process according to the present disclosure;
Figure 8 shows a flowchart of yet another detailed process according to the present disclosure.

### Detailed description

The present disclosure provides fast and safe methods for deep discharging of a battery to be recycled, including battery cells, battery modules or battery packs, by proving a discharging process carried out in two separate steps, one step being active and the other step being passive, where the active step typically comprises monitoring of the discharge process. By performing the method in two steps, instead of performing the full discharging process as a single active step, increased throughput and lower costs are attained.

Aspects of the present disclosure will be described more fully hereinafter with reference to the accompanying drawings. The methods disclosed herein can, however, be realized in many different forms and should not be construed as being limited to the aspects set forth herein. Like numbers in the drawings refer to like elements throughout. The features of various embodiments can be combined to form further exemplary aspects of the present disclosure that may not be explicitly described or illustrated. Further it is to be understood that the words and terms employed herein are used for describing specific embodiments only, and is not intended to be limiting, since the scope of the present invention is defined by the appended claims and equivalents thereof.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some aspects the non-limiting term "battery" or "batteries" is used, which is intended to include a battery cell or battery cells, a battery module or battery modules, which typically contain a plurality of battery cells, and a battery pack or battery packs, which typically contain a plurality of battery modules. The term "battery" is used for secondary batteries, i.e., rechargeable batteries. Such batteries are usually provided as modules, which may include multiple battery cells that are connected in series and/or in parallel, or packs, which may include one or more battery modules and associated control circuitry. In the following, the term "battery" is intended to encompass each or any of a single battery cell, a battery module, and/or a battery pack. The processes herein refer to one or more rechargeable battery cell, which are typically present in a battery pack, wherein the one or more battery cell may be present in a battery module present in the battery pack.

The term "active" as in active discharging refers to a method where "active steps" are taken during the discharge process, such that the process parameters vary. For example, in an active process/method, external influence on the battery varies. Active discharging thus typically refers to varying process parameters / active control of the process. As an example, active discharge may be performed by a controllable (adaptive) electronic load. Typically, an active discharge method is also monitored, and energy recovery is performed. In the active discharging, the energy is typically recovered as electrical energy. By "passive", as in passive discharging, is referred to a method where no or very little interference is made during the discharge process. The external influence on the battery is static, at least during a first main part of the discharge process (first sub-step). A passive discharge method may for example use a static resistive load as the first main part of the discharge process. As a second part (second sub-step), the battery may be subjected to short circuiting, which is also passive, but requires an active step of starting the short circuiting the battery. The removed energy in a passive method usually becomes heat, which typically is not recovered/used. Thus, no electrical energy recovery performed in the passive discharging method. Typically, the process is neither monitored, even though some sort of monitoring may be performed.

The term "cell voltage" refers to the voltage of the battery/cell, which is determined by the chemical reactions in the battery, the concentrations of the battery components, and the polarization of the battery. The voltage calculated from equilibrium conditions is typically known as the nominal battery voltage. The cell voltage may also be referred to as the "operating voltage". The cell voltage or remaining cell voltage may be measured using any suitable method in the art, such as using a multimeter.

The term "voltage threshold", "target voltage" or "target voltage threshold" refers to a threshold set for a discharging process, or a step of a discharging process. This threshold may be set per battery cell, or per battery pack. For example, a first threshold may be set for a first step of the discharge process (the first discharge process), i.e., when to terminate the first step and commence the second step (second discharge process), and a second threshold may be set for when to terminate the second step (second discharge process) of the discharge process. Hence, the discharging may be terminated once the battery or cell has reached the respective threshold, i.e., has a remaining cell or pack voltage being the same as the target voltage threshold, or below.

For the first discharge process, the first voltage threshold may be set to correspond to about 0% state of charge (SOC). In this process, the cell voltage is measured or estimated/calculated and correlated to the SOC. For example, the pack voltage is measured and said value is used to calculate the average cell voltage. When said calculation indicates that the average cell voltage is in the range of 2.5 to 2.8 V, then it is estimated that the battery is close to 0% SOC. For the second discharge process, it may be set to about 0 V, such as in the range of 0-0,5 V.

A battery/battery cell may have several "properties", such as a state of charge (SOC) of the cell(s), and a type/size of the battery cell(s). Based on these properties, the energy content of the battery cell may be derived, e.g., the energy content is derived based on SOC + size/type (size and type of battery typically correlating). Based on said energy content, a discharging time to reach a target cell voltage may be estimated for the battery cell based on previous knowledge of discharging times for reaching certain cell voltage levels for battery cells having similar properties/energy content, where the discharge time is estimated as the time needed for a similar battery of a similar energy content to reach a certain cell voltage. By discharging the battery cell for a processing time corresponding to the estimated discharge time, the energy content of the battery cell should be reduced until the remaining cell voltage is at or below the desired voltage threshold. Thus, the processing time for arriving at the first or second voltage thresholds may be estimated based on battery properties, and the discharge times set accordingly. Voltage validation may then confirm that the respective thresholds have been reached. The first discharge process may include continuous monitoring of the battery status and parameters by repeated measurements of the battery parameters, such as battery voltage. Further, knowledge about batteries with similar properties may be used for designing a discharge schedule for the first active discharge process, where the schedule defines the discharge current to be used at different parts of the discharge process, i.e., how to gradually lower the discharge current in discrete or continuous steps from the initial discharge current, to maximize efficiency but avoid thermal runaway.

In the context of this disclosure, the term "discharging" is understood as fully discharging a battery down to a voltage of about 0V. Such full discharging usually makes a battery unusable, as internal processes in the battery cells prevent recharging afterwards, but is important when the discharging is a first step of a recycling process. Fully discharging a battery is sometimes also referred to as "overdischarging" or "deep discharging". Overdischarging or deep discharging is thus only intentionally performed when the battery is to be recycled, and is otherwise avoided to prevent premature failure of the battery.

One problem arising in battery recycling is that the charge level of returned batteries is usually unknown. Due to the high charge density of modern batteries, significant amounts of energy can be stored in the battery at the time it enters a recycling facility. If released in an uncontrolled manner, such stored energy can present a significant electrical shock or fire hazard.

Returned batteries are therefore subjected to a controlled discharge process as a first step in the recycling process. In this process, energy stored in the battery can either be dissipated as heat, when the battery is discharged through a resistor, or can be harvested for re-use, when the battery is discharged through a DC/DC converter or similar circuitry.

The standard technique for electrical discharge is using static or dynamic resistance. This resistance is typically in the form of an electronic load which can be applied to a source to discharge it. The device consists of a resistor or a group of resistors, and an electronic control system. With this device, a constant current (CC), constant resistance (CR), constant voltage (CV) or constant power (CP) can be set to discharge the battery. In the case of the resistor, the energy removed from the battery is converted to heat. Modern electronic loads include a 'regenerative' feature with an AC/DC inverter or DC/DC converter so the energy from the battery can be recovered for use within the facility grid or for other energy storage. Many of these processes aim to discharge the batteries completely, referred to as "deep discharge" or full discharging, or nearly completely, to avoid thermal runaway when crushing the batteries. Thus, a bottleneck in the recycling process is the time and effort needed to discharge the cells prior to crushing, where the discharge process is continued typically until the cells are at, or close to, 0 V.

While some batteries may tend to show a rebound effect, where the output voltage increases again even after the battery has been discharged to 0V, it is often important that the output voltage of the battery reaches 0V at one time during the discharging process, when the battery is to be recycled in a next step.

During the discharging process, heat is generated in the battery. This heat mainly comprises heat created by ohmic losses and by exothermic chemical processes when the battery charge approaches 0V. Overheating of a battery may lead to a pressure increase in individual battery cells, which may cause a battery to swell and eventually burst or explode. Overheating of a battery may also result in a thermal runaway, in which a cascade of exothermic chemical reactions eventually causes the battery to burn.

To avoid such hazards, a general approach is to discharge returned batteries with a low current. Known strategies include constant current (CC), constant resistance (CR), constant voltage (CV) or constant power (CP) control. Depending on the charge capacity of the battery, such low-current discharge can take up to 24 hours.

It would be desirable to provide a discharge method and system for batteries to be recycled which enables a higher through-put of batteries in an industrial battery recycling process. It would also be desirable to provide a discharge method and system for batteries with a better control of related hazards and which reduces costs.

These objectives, and relates advantages, are achieved by subjecting the batteries to the two-step discharging processes of the present disclosure.

Battery cells in general comprise an anode, cathode, separator and electrolyte. The electrolyte acts as a conductor allowing ions to move between the positive electrode (cathode) and the negative electrode (anode) and in the reverse, in an oxidation and reduction reaction respectively. In lithium-ion secondary batteries (LIBs), lithium ions move from the anode to the cathode during discharge. The separator is meant to allow the transfer of ions but not to allow a short circuit between the anode and cathode. Furthermore, a battery cell typically comprises a casing for housing the electrodes and the electrolyte, current collectors or terminals and various safety devices, such as polymer gaskets, and one or more vents or valves for venting during thermal runaway. The positive terminal is connected to the cathode, e.g., by an aluminum tab, whereas the negative terminal is connected, e.g., by a copper tab, to the anode. The positive and negative terminals form the electric poles of the battery cell. The terms "electric pole" or "pole" and "terminal" are used interchangeably herein.

Batteries in general are characterized by their capacity and operating voltage. The operating voltage of a battery cell is limited by the potential difference across the terminals of the battery when no current is being drawn, also known as the open circuit voltage (Voc). For safe operation, battery cells are typically limited to an operating voltage of 4.2 V. Over a given voltage, a cell can only deliver a specific amount of electric charge or current, this is known as the capacity (Q) of the battery which is measured in ampere hours (Ah). The capacity is limited by the electrode, particularly cathode materials.

Whether a battery cell is fully charged or not is monitored using the state of charge (SOC). The SOC is defined as the available electric charge over the full capacity of the battery. At 100% SOC a battery cell is fully charged and has its full capacity. At 0% SOC, the cell has little capacitance left and can supply little current. 0% SOC typically means that about 2,5 - 3 V remains, such as 2,5-2,8 V. Based on the SOC and type or size of a battery cell, the energy content of the battery cell may be derived.

In the present two-step discharge process, a first and second discharge method is used for discharging, i.e., deep discharging, one or more rechargeable battery cells to be recycled. The discharge process comprises a first active discharge method, and a second passive discharge method, performed after the first discharge method. By "active" is meant that the first discharge process is a process including active discharging of the one or more battery cell including, such as by subjecting the one or more battery cell to external influence which is varied, to actively discharge the one or more battery cell, said active process is typically monitored, such to ensure the status of the battery within acceptable limits. Further, energy recovery is performed. By "passive" is meant that the second discharge process is a process including passive discharging of the one or more battery cell, i.e., little or no adaptations to any external influence once the discharge process has started, no energy recovery and typically no continuous monitoring (even if some sort of monitoring may be performed). As an example, the first active discharge process may comprise a controllable electronic load for energy recovery, which may be varied, and the second passive discharge process may comprise a constant resistive load.

Normally, deep discharging of a battery to be recycled is made using one method only (one step), typically active discharging (e.g., electrical discharging using variable electronic load). It has previously been believed that applying one discharge method only (faster more expensive active discharging or slower less expensive passive discharging) is most efficient. Using less equipment and fewer steps have been considered as preferred. Also, moving of a battery during an ongoing discharge method has been avoided due to possible hazards. However the inventors have realized that even though it could be more efficient to discharge a single battery using only an active method, the throughput in a system applying only said method would be limited, or very expensive, as the method and containers used for active discharging is much more expensive that the passive method and containers, and thus the throughput is limited by the number of containers available for the active discharging. As the last part of the process takes a considerable amount of time, it was hypothesized that the method could be split into two steps, one active and one passive, to free up more resources and increase throughput. It was found that the most important part of the discharge process to perform as an active process was until the battery reached a SOC of about 0%. At that stage, the energy recovery had ended and the active discharge process was no longer required, the battery would be safe to handle, and could thus be moved to a passive discharging step until it was completely deep discharged. It was further determined that, contrary to previous perception, this two-step process was more efficient than using a single method, when scaling up. The two-step method both reduces costs and increases throughput, and thus increases efficacy when numerous batteries are to be discharged simultaneously.

Thus, by performing the process in two steps, the first part as an active step and the last part of the discharge as a passive step, more resources for discharging can be freed up, the throughput increased and less resources are spent per discharged battery. Thus, the new processes provide an increased throughput and asset utilization, recovery of 95% of the energy in the battery, controlled and supervised discharge during "critical" phase and final discharge and short circuit done in "low cost" resistive containers. Accordingly, an improved discharge process is provided, and increased throughput is reached in the recycling discharge system.

Hence, an improved process is provided, comprising discharging one or more battery cell, such as a battery pack, using a first discharge method, wherein said first discharge method includes active discharging of the one or more battery cell, and discharging the one or more battery cell using a second discharge method, wherein said second discharge method includes passive discharging of the one or more battery cell. The first discharge method includes subjecting the one or more battery cell to external influence to actively discharge the one or more battery cell, wherein said external influence may be varied during the discharge process. In an example, subjecting the one or more battery cell to external influence includes subjecting the one or more battery cell to a discharge current, which may be varied during the discharge process. The active discharging of the first discharge method removes energy from the one or more battery cell, which energy may be recovered using an AC/DC inverter or DC/DC converter, as described above. As such energy recovering equipment is quite expensive, the time needed to use said equipment for each battery is reduced by performing the last part of the discharge process in a passive method, i.e., not using said equipment.

The first discharge method may further comprise continuously or repeatedly monitoring a status of a battery including the one or more battery cell through one or more sensors by determining one or more status parameters. Monitoring may include monitoring the status of the battery by determining or measuring one or more status parameters, including at least one of output voltage, output voltage change rate, temperature, temperature change rate, shape of the battery, and/or emission behavior of the battery. The monitoring may further include determining an age and/or charge level of the battery from the output voltage, output voltage change rate, temperature, and/or temperature change rate of the battery.

In some embodiments, the first discharge method includes continuously monitoring a status of the battery through one or more sensors, and modifying a discharge current in response to the status of the battery, such as and monitoring the temperature of the battery and adjusting the current so that the temperature remains below a pre-defined set point.

Thus, discharging one or more battery cell using a first discharge method may comprise applying an initial discharge current to the one or more battery cell, continuously or repeatedly monitoring the status of the battery through one or more sensors by determining one or more status parameters and repeatedly evaluating the one or more status parameters to determine the status of the battery. The status parameters may indicate if the risk of thermal runaway is low, moderate or high. Hence, the method may comprise repeatedly comparing the one or more status parameters to threshold values to determine the status of the battery and thus the risk of thermal runaway, where the risk of thermal runaway may be determined as low, moderate or high. On condition that the monitored battery status determines the risk of thermal runaway as low, the discharge process is continued with the present discharge current. On condition that the monitored battery status determines the risk of thermal runaway as moderate, the discharge current is reduced. On condition that the monitored battery status determines the risk of thermal runaway as high, the discharge current is disabled.

What values of the status parameters, such as threshold values for temperature and temperature change rate, that is tolerable would be known to the skilled person, who would be able to determine from said parameters if the risk of thermal runaway is low, moderate or high. When the battery is in a non-critical state, the risk is low. A non-critical state of a battery is to be understood as a state in which the battery does not have an increased likeliness of overheating, pressure buildup, swelling, bursting, and/or short-circuiting. A non-critical state of a battery may be a state of the battery allowing for continued operation of the battery under the present conditions for a predetermined time, like e.g., 1 minute, 5 minutes, or 10 minutes, without damaging the battery. When the battery is in a critical state, the risk is high. A critical state of the battery is to be understood as a state where overheating, pressure buildup, swelling, bursting and/or short-circuiting is imminent. In case of detection of a critical state of a battery, appropriate countermeasures can be taken as described later herein. The risk is considered as moderate when the battery is in a transitional state, where the status of the battery changes in a direction towards a critical state. A transitional state of the battery is understood as state when the battery has not yet reached a critical state, but reaching of a critical state is to be expected if operation of the battery is continued under the present conditions.

By monitoring the status of the battery and modifying the discharge current in response to the status, it is possible to apply a high discharge current while the battery is in a non-critical state, and to reduce the discharge current when the battery is in a transitional state, where the status of the battery changes in a direction towards a critical state. As a result, the total time needed for fully discharging a battery can be significantly reduced.

The step of monitoring the status of the battery may include determining at least one of output voltage, output voltage change rate, temperature, temperature change rate, shape of the battery, and/or emission behaviour of the battery. While the output voltage of a battery usually is a good indicator for the charge level of the battery, the output voltage change rate can, in combination with the known discharge current, be used as an indicator for the age of the battery. The temperature and temperature change rate of a battery can be used as indicators for a thermal state of the battery, and for the amount of heat generated in the battery by ohmic losses and/or chemical processes. The shape of a battery can be monitored to identify the onset of swelling, which is an indicator of pressure building up in the battery. The emission behaviour of a battery can be an indicator of imminent damage to the battery. The term "emission behaviour" can include, but is not limited to, acoustic emissions like sounds, and chemical emissions like smoke. Monitoring the status of the battery may include determining an age and/or charge level of the battery from the output voltage, output voltage change rate, temperature, and/or temperature change rate of the battery. The temperature of a battery may be a surface temperature of the battery. The temperature of a battery may be a core temperature of the battery. The core temperature of the battery may be measured by internal sensors of the battery, or may be estimated from the surface temperature and temperature change rate of the battery.

Different discharge programs may be used for the first discharge process, wherein said discharge programs can be continuous.

In a possible method according to the present disclosure, the discharge current may be modified in discrete steps. The discrete steps may be discrete steps in time, so that the discharge current is maintained constant for a certain time step, and then modified if appropriate according to the battery status, and then again maintained constant for the certain time step, and so on. The certain time step may be 1 second, 10 seconds, 1 minute, 2 minutes, 5 minutes, 10 minutes, or any other suitable time step. The discrete steps may be discrete current steps, so that the discharge current is modified from a first discharge current to a second discharge current, differing from the first discharge current by a certain current step. The current step may be 10A, 5A, 2A, 1A, 0.5A, 0.1A, or any other suitable current step. The current step may depend on the total discharge current, i.e., the current step may be 10A while the total discharge current is 20A or more, 5A while the total discharge current is 5A or more, and 1A while the total discharge current is 1A or more.

In a method according to the present disclosure, the discharge current may be modified when the output voltage drops below a threshold value. The discharge current may be reduced when the output voltage drops below a threshold value. The discharge current may be reduced if the temperature of the battery rises above a threshold value. The threshold values of the temperature and/or output voltage may be determined based on the type, and optionally the age and or the charge level, of the battery.

After modifying the discharge current, a method of the present disclosure may include maintaining the discharge current constant for a predetermined time, allowing the status of the battery to settle. Directly after modifying the discharge current, some parameters like the output voltage may show a transient behaviour, while other parameters like the temperature show a time-lag behaviour. Allowing the battery to settle for a predetermined time avoids such transient or time-lag behaviour from impacting the discharging process.

The discharge process may be terminated if the temperature change rate rises above a threshold level. The temperature change rate rising above the threshold level may indicate the battery being in an unstable state, like an onset thermal runaway. Terminating the discharge process may prevent the battery status from further degrading.

Typically, the ambient temperature is controlled during the respective discharge processes. If needed or desired, the battery (module or pack) is actively cooled during the discharge procedure. It should be noted that many battery modules and packs are equipped with a built-in cooling system, which during operation is supplied with a coolant medium through an inlet. The coolant medium may be a liquid and the cooling system may comprise one or more pipes conveying the coolant close to the individual battery cells to provide a cooling effect, thereby preventing thermal runaway events and keeping the battery cells close to an optimal operating temperature. Hence this embodiment comprises the further step of connecting the inlet and outlet of the built-in cooling system to an external supply of coolant medium. This coolant is then circulated through the system similarly to when the battery is in normal operation, thereby applying active cooling during the discharge procedure. A more aggressive discharge schedule may be used in this scenario since the cooling reduces the risk of the battery reaching critical state. Such a discharge schedule could e.g., comprise a larger step-wise increase of discharge current, and/or the time step during which a certain level of discharge current is applied may be shortened. Stated differently, the applied discharge curve may be steeper and/or shorter in time than when no active cooling is used. In this way, an even faster discharge procedure may be achieved without compromising on safety. The processes, especially the first discharge process, may further include subjecting the battery to external cooling if the temperature of the battery does not settle in a predetermined time after termination of the discharge process. Failure of the battery temperature to settle may be an indicator for the battery status changing towards a critical state. Failure of the battery temperature to settle may be an indicator for severe battery damage like ongoing thermal runaway. External cooling may include immersing or submersing the battery in cooling fluid, like in a water bath, or in any other suitable cooling fluid bath. Another possible method may include terminating the discharge process and subjecting the battery to external cooling if abnormal emission behaviour of the battery is detected. An abnormal emission behaviour can include, but is not limited to, emission of sounds, sparks, flames or smoke.

The first discharge method may be terminated once the one or more battery cell has reached a first voltage threshold and/or a first estimated discharge time has passed (based on previous knowledge of similar batteries). The first voltage threshold is in the range of 2.5 to 2.8 V for a cell (average cell voltage, may thus be scaled for a pack), and corresponds to a state of charge (SOC) of 0% in the one or more battery cell. The second discharge method may be terminated once the one or more battery cell has reached a second voltage threshold and/or a second estimated discharge time has passed. The second voltage threshold corresponds to a cell voltage of about 0V, such as in the range of 0-0,5 V of the one or more battery cell.

The one or more battery cell may be present in a battery module, and/or the one or more battery cell is present in a battery module which is present in a battery pack, i.e., the one or more battery cell to be discharged may be part of a battery pack. The cells are coupled to each other in series and/or in parallel, and may thus be discharged in the pack. For a pack of nominal 350 V (maximal 400 V), there is typically at least 96 cells in series, i.e., one cell is just above 4 V. For a pack of nominal 350 V, the first voltage threshold for the pack would be between 240 and 270V.

The second discharge method is carried out after the first discharge method. When it is determined that the battery/battery cell to be discharged has reached a first voltage threshold, i.e., when the average cell voltage is determined/estimated to be in the range of 2.5 to 2.8 V which correspond to approximately 0% SOC, then the first discharge method is terminated, and the second discharge method is started. This may for example be performed by measuring the pack voltage of the battery pack to be discharged, and calculating the average cell voltage. When the battery has reached 0% SOC, the risk of adverse events during the following discharge process is less, and hence less supervision is needed. Hence, the unsupervised second discharge process may start.

The second discharge method may include two separate sub steps, wherein the first sub step includes discharging the one or more battery cell through a static resistor by applying a resistance to the one or more battery cell in the form of a resistive load, and the second sub step includes short circuiting the one or more battery cell. For a battery pack of 400 V, the first sub step may be terminated and the second sub-step initiated when the battery pack has reached a remaining voltage of 50 V or less, such as 10 V, wherein the first sub step is terminated and the second sub step initiated by short circuiting the cells of the battery pack. Thus, this may correspond to an average cell voltage of 0,5-0,1 V. By short circuiting the battery, the last energy is removed. After the second discharge method, the battery/battery cell has reached a deep discharge and is ready for the next step in the recycling process.

In the present disclosure, one or more battery cell to be discharged may be provided (e.g., a battery pack), whereafter identification data indicating one or more properties of the one or more battery cell may be acquired. The one or more properties includes one or more of a SOC, a type or size, and energy content of the one or more battery cell. Said data may be used for estimating process times, and selecting an initial discharge method, such as an initial discharge current, and possibly also a discharge schedule to be used (how/when to adjust the discharge current during the process).

In one embodiment, the first discharge process may be based on previous knowledge of similar batteries, and a discharge program which has a predetermined change of discharge current (predetermined scheme) may be used. One aim is to provide a software-controlled discharging process which uses a three-axis graph of predefined voltage, current and temperature data to control the discharge of a battery pack or module down to the first voltage threshold. The discharging process provided by this disclosure may be automated such that there needs to be little to no human interaction with the battery and the processing time may be shortened. Discharge curves for healthy and aged batteries may be generated and used as guides for the program. The discharge curves may comprise a limit for a discharge current depending on battery output voltage and battery temperature. The program may adjust the discharge current according to the limit unless the temperature goes over a pre-determined set point, or the battery's status deteriorates in another way, in which case the current may be lowered. For generating the discharge curves, behaviour of several different battery types of different age may be measured and analysed. Alternatively, or additionally, known correlations between battery output voltage, discharge current, and battery heat production may be used to model an optimal discharge curve.

Accordingly, based on knowledge from discharging processes of other batteries, optimized curves for controlling the discharge current during discharge may be generated. By comparing and matching the properties of a current battery to be discharged to a previously discharged battery having similar properties as the battery to be discharged, a predetermined discharge curve (scheme) may be selected for the current battery. Said predetermined curve or scheme typically defines which discharge current to apply during the process, starting from an initial discharge current and continuously modifying the current according to the curve (scheme). This modification of the discharge current may be continuous according to the curve, or performed in small discrete steps. The voltage will drop continuously during the process, and also the load. In an alternative embodiment, one may discharge using a consistent load instead, such as 10 kW, and hence the current will gradually be increased until a sufficient discharge (typically 0% SOC) has been reached.

The process then comprises initiating the first discharge method, which is terminated once the first voltage threshold is reached (battery approximately at 0% SOC). Then the second discharge method in initiated, and terminated once the second voltage threshold is reached, which is approximately at 0V. Alternatively, or additionally, pre-estimated processing times may be used.

Any monitored variable (active) discharge method may be used in the first discharge method. In one embodiment, an electrical discharge method is used. The first discharge method may comprise applying an initial discharge current to the one or more battery cell, repeatedly monitoring the status of the battery through one or more sensors by determining one or more status parameters, and adjusting the discharge current accordingly. The second discharge method may comprise any (unsupervised) static discharge method. In one embodiment, the second discharge method comprises using a static resistive load, until the second threshold of about 0V has been reached, or alternatively until a remaining cell voltage of about 0,5 V (0,5-0,1 V) has been reached, in which the static resistor is used as a first sub step, followed by a second sub-step of short circuiting the battery (cell). The type of first and second discharge method is not essential, the main purpose of the present disclosure is to use a more expensive and resource limited method (e.g., monitored and expensive containers) in the first discharge process, and then finishing the deep discharge using a less expensive and resource critical method as the second discharge method.

If the first and second method is carried out in different containers, a first battery container and a second resistive container, respectively, then the battery is moved from the battery container to the resistive container. In an alternative embodiment, the batteries are not contained, but placed in an open process area, and the second discharge method may be carried out at the same location, or at a different location in the open process area.

The discharge times may vary significantly between different batteries. In one example, the one or more battery cell is present in a 400 V battery pack, the first voltage threshold of the battery pack in in the range of 250V-300V, such as 240-270 V, and the first estimated discharge time is 0,4-0,6 hours, the second estimated discharge time is 3-5 hours, wherein the first sub step has an estimated discharge time of 2-3 hours, and the second sub step has an estimated discharge time of 1,5-2 hours (typically at least around 1 hour). In another example, the first estimated discharge time is 2-4 hours, the second estimated discharge time is 4-6 hours, wherein the first sub step has an estimated discharge time of 2-4 hours, and the second sub step has an estimated discharge time of 1,5-2 hours (typically at least around 1 hour). As the discharge times depends on the individual pack, as discharge time is dependent many things a general time cannot be set for all packs. However, based on the properties of the pack, it can be estimated for each individual pack..

The present disclosure reaches one or more of the above objectives by providing a system for discharging one or more rechargeable battery cell to be recycled, comprising battery discharging means and a control unit, wherein the control unit is configured to control the battery discharging means to execute a method according to the above description with a battery provided to the system. In some embodiments is provided a system for discharging of one or more rechargeable battery cell to be recycled, comprising one or more battery containers, one or more resistive containers, one or more battery discharging means and one or more control unit, wherein the control unit is configured to control the battery discharging means to execute the processes above and below, for one or more battery cell provided to the system.

The discharging means may comprise, but is not limited to, one or more of fixed resistors, variable resistors, current regulators, DC/DC converters, or similar circuitry. The control unit may comprise processing circuitry and a memory device connected to the processing circuitry. The processing circuitry may comprise one or more of a microcontroller, a microprocessor, a graphical processing unit (GPU), an analogue signal processor (ASP), a digital signal processor (DSP), or any other suitable processor. The memory device may comprise one or more of a random access memory (RAM), a read only memory (ROM), a flash memory, a hard drive, or any other suitable memory device. The control unit may comprise a Von Neumann machine, a personal computer, or the like.

A system according to the present disclosure may comprise one or more sensors for monitoring a status of the battery. A system according to the present disclosure may also comprise battery identification means. The battery identification means may comprise one or more of a barcode reader, a QR-code reader, a machine vision system, and a manual input terminal. A vision system may comprise a camera, and may additionally comprise an image processing and/or image recognition system. The one or more sensors of the system may comprise one or more of a temperature sensor, a voltage sensor, a current sensor, and a machine vision system. A temperature sensor may comprise one or more of a thermocouple, a PTC, an NTC, a pyrometer, or the like. A machine vision system may comprise a camera and image processing circuitry.

A system according to the present disclosure may further comprise a database connected to the control unit, the database storing characterizing data of one or more battery types to be provided to the system. The database may be a local database included in the system, an external database provided on an external server, or a cloud-based database.

A system according to the present disclosure may further comprise a battery connection unit having a plurality of different connecting elements suitable for connection with different battery types. Different connecting elements may be provided in form of a magazine, a carousel, or any other suitable mechanism for changing active connecting elements.

A system according to the present disclosure may further comprise a cooling unit. The cooling unit may be a water bath. The cooling unit may be a stirred water bath, a still water bath, or a constant flow water bath.

The system may comprise a plurality of containers, wherein the containers are battery containers or resistive containers, wherein the first discharge method is carried out in a battery container, whereafter the battery is moved to a resistive container for carrying out the second discharge method. The battery container may comprise variable resistors, current regulators or DC/DC converters and controllable electronic load for energy recovery, and include continuous monitoring of the status of the battery. The resistive containers may comprise a constant resistive load (fixed resistors), and thus the second discharge method includes no variable external influence to discharge the one or more battery cell, no energy recovery nor any repeated monitoring the status of the battery.

The present disclosure reaches one or more of the above objectives by providing a computer program product, comprising a set of machine-readable instructions stored on a volatile or non-volatile medium, which, when read and subsequently executed by a processing circuitry of a system according to the above description, cause the system to execute a method according to the above description. The computer program product may be provided on a floppy disk, a flash memory device, or may be downloadable from a cloud server. The computer program product may be transferred into the memory device of the control unit, and may be read and subsequently executed by the processing circuitry of the control unit.

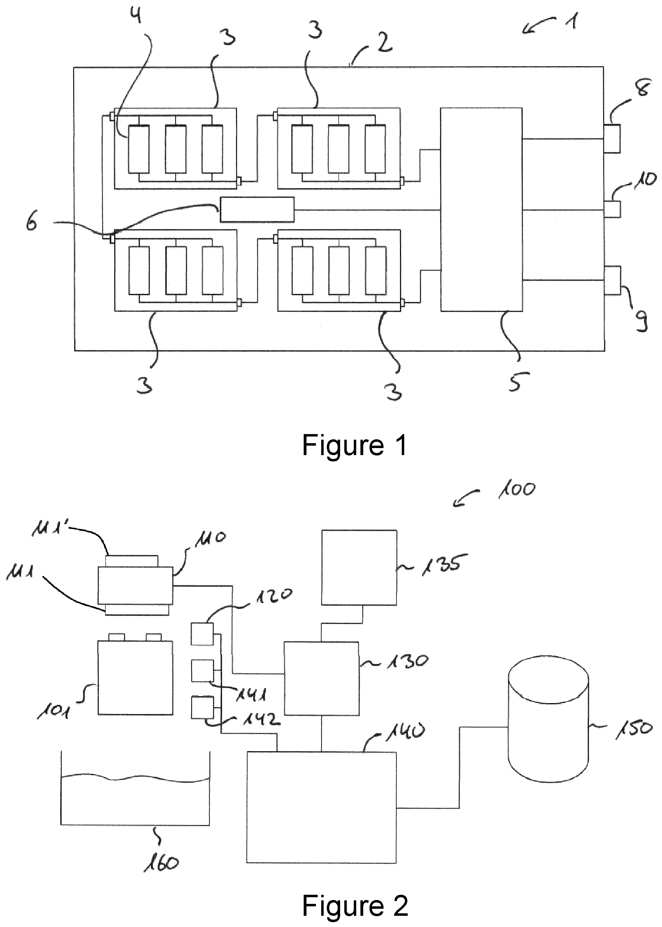

In Figure 1, an exemplary battery is shown. The depicted battery is a battery pack 1 comprising a housing 2, in which a plurality of battery modules 3 are contained. In the shown example, the battery pack 1 contains four battery modules 3 connected in series.

Each of the four battery modules 3 contains a plurality of battery cells 4. In the shown example, each battery module 3 contains three battery cells 4 connected in parallel. In other possible battery designs, the battery cells of each battery module may be connected in series, while the battery modules of the battery pack are connected in parallel. In other possible battery designs, cells and modules may both be connected in series, or may both be connected in parallel. Battery design may be chosen so that the battery is best adapted for the intended use, whereas parallel connection of cells and/or modules may be used to provide higher output current, while serial connection of cells and/or modules may be used to provide higher output voltage.

The battery pack 1 further comprises control circuitry 5 and a sensor 6. The control circuitry 5 may monitor a status of the battery pack 1, e.g. a temperature and/or a charge level of the battery cells 3 and/or battery modules 4. The sensor 6 may be a temperature sensor. Other than shown in Figure 1, the sensor 6 may also be integrated in individual modules 4 or cells 3. The control circuitry 5 may serve to connect the respective battery modules 3 to output terminals 8, 9 of the battery pack 1. The control circuitry 5 may serve to disconnect the respective battery modules 3 from the output terminals 8, 9 if the status of the battery pack makes this necessary, e.g. to avoid overheating, overcharging, or overdischarging the battery pack 1 during normal operation. The control circuitry 5 may provide status information, e.g. a reading of the sensor 6, through an output terminal 10 of the battery pack 1.

In order to safely recycle a battery, like the battery pack 1, or any of the battery modules 3 or the individual battery cells 4, discharging is required. Figure 2 shows a possible embodiment of a system 100 for discharging a battery 101. The battery 101 itself is not part of the system 100, but is shown in Figure 2 for better understanding. The system 100 comprises battery connection unit 110, battery identification means 120, battery discharging means 130, an optional energy storage system 135, a control unit 140, a database 150, and a cooling unit 160.

### Battery connecting unit

The battery connection unit 110 serves to connect the battery 101 to the system 100. The battery connection unit 110 may comprise one or more connecting elements 111, 111' for connecting output terminals of the battery 101. A plurality of connecting elements 111, 111' may be provided for connecting with different types of batteries. In the shown example, the battery connecting unit 110 has a first connecting element 111 on a first side, and a second connecting element 111' on a second side. For connecting a different battery to the system, the battery connection unit 110 may be turned by 180° to connect the second connecting element 111' with the battery 101.

In an alternative design, the battery connecting unit 110 may comprise a single connecting element 111, and a plurality of adapters may be provided to connect the battery connection unit 110 with different types of batteries 101. The plurality of adapters may be provided in any suitable manner, like on a carousel, in a magazine, or the like. In yet another alternative design, the one or more connecting elements 111,111' may comprise manually operable clamps (not shown), which can be attached to output terminals of the battery 101.

The battery connection unit may be operated manually, semi-automatic, or fully automatic. For a semi- or fully automatic operation, the system may further comprise battery identification means.

### Battery identification means

Battery identification means 120 are provided in the system 100 in order to enable automatic detection of the type of the battery 101 to be discharged. Detection of the battery type may enable automatic selection of a suitable connecting element, and/or determination of appropriate discharging process parameters as explained further below. The battery identification means 120 may include a manual input terminal like a keyboard, a touchscreen, or the like. A user may read an identification code provided on the battery 101, and enter the identification code through the manual input terminal. The battery identification means 120 may include a barcode or QR-code reader for automatically scanning an identification code provided on the battery. The battery identification means 120 may include a machine vision system comprising a camera and an image processing device for automatically detecting a battery type of the battery 101 through the size, shape, or other optical properties of the battery 101.

### Battery discharging means

The battery discharging means 130 are connected to the battery connecting unit 110 and are designed to apply a discharge current to the battery 101. The discharging means 130 having variable external influence may thus be used for the first discharge process. The battery discharging means 130 may comprise one or more fixed or variable resistors, which can be connected to poles of the battery 101. For the second discharge process, fixed resistors are used. By connecting a resistor to the poles of the battery 101, a discharge current will flow between the poles of the battery 101 and through the resistor. One or more constant current regulators (CCR) may be connected in series with the one or more resistors, to provide for a constant discharge current being applied to the battery 101, irrespective of changes in the output voltage of the battery 101. The battery discharging means 130 may comprise one or more manually or electronically operable switches, designed to switch a discharge current between different current paths. The different current paths may comprise different resistors and/or different CCRs, so that a discharge current can be modified by switching it between different current paths.

By routing the discharge current through one or more resistors, electric energy stored in the battery 101 is converted into heat, which is then dissipated from the resistors. Instead of dissipating the electric energy as heat, the energy may be harvested for further use when the first discharge method is running. Therefore, the battery discharging means 130 may comprise electronic converters, like DC/DC-converters, which convert the discharge current of the battery 101 into a usable current. The usable current can e.g. be used to charge an energy storage system 135, like a battery storage. Instead of charging a storage system, the usable current can directly be fed into a network, like the electric supply network of a battery recycling facility (not shown). The battery discharging means 130 may comprise a digital or analogue communication interface, through which the switches and/or converters may be controlled. The battery discharging means 130 may comprise a plurality of containers, such as battery containers and resistive containers.

### Control unit

The system 100 further comprises a control unit 140. The main function of the control unit is to control the battery discharging means 130 to facilitate safe and fast discharging of the battery 101. In some embodiments, the control unit 140 may further monitor a state of the battery 101 through one or more sensors 141, 142, and control the battery discharging means 130 in response to the determined state of the battery 101. The sensors 141, 142 will be described in more detail further below.

A possible embodiment of the control unit 140 is described in the following, The core of the control unit 140 is a processing circuitry (not shown), which can be any suitable microcontroller, microprocessor, or graphical processing unit. Known examples of such processing circuitry include a Motorola 68000 processor, an intel 80486 processor, or the like. The processing circuitry is connected to two memory devices. The first memory device may be a dynamic random access memory (DRAM), and may be used by the processing circuitry for temporarily storing data like sensor readings, battery parameter, intermediate calculation results, or the like. The second memory device may be read only memory (ROM) or a static random access memory (SRAM), and may be used for storing program instructions for the processing circuitry. The control unit further comprises a digital input/output interface, an analogue input/output interface, and a network interface. Through interfaces, the processing circuitry can communicate with digital devices like the battery discharging means and/or battery identification means, with analogue devices like sensors 141, 142, and with an external network. The digital input/output interface may comprise a USB interface, an RS-232 interface, or the like. The analogue input/output interface may comprise one or more digital-to-analogue converters (DAC), analogue-to-digital converters (ADC), and the like.

### Sensors

The system 100 may comprise sensors 141, 142. While two sensors 141, 142 are shown, any other suitable number of sensors may be applied in the system 100. One of the sensors 141, 142 may be a temperature sensor for determining a temperature of the battery 101. The temperature sensor may be a contacting temperature sensor, which can be applied to an outer surface of the battery 101. Possible contacting temperature sensors include, but are not limited to, a thermocouple, a PTC, or an NTC sensor. The temperature sensor may be a contactless temperature sensor, which can determine the surface temperature of the battery 101 from a distance. Possible contactless temperature sensors include, but are not limited to, IR-sensors, pyrometers, or thermographic cameras.

One of the sensors 141, 142 may be a voltage sensor, for determining an output voltage of the battery 101. A voltage sensor can preferably be included in the battery discharging means. Voltage sensors usually include filters and a voltage divider circuit, and optionally an analogue-to-digital converter (ADC), to provide a digital voltage reading. One of the sensors 141, 142 may be a current sensor for determining a discharge current of the battery 101. Current sensors usually include a shunt resistor, coupled with a voltage sensor (see above) for determining a voltage drop over the shunt resistor. One of the sensors 141, 142 may be a vision system, comprising a camera and an image processing system. The vision system may be part of the battery identification means. The vision system may be used to detect changes in the shape of the battery 101, which may be an indicator for an internal pressure buildup. The vision system may further be used to detect emission of fumes, smoke, spark and/or flames from the battery 101. One of the sensors 141, 142 may be a microphone. A microphone may be a capacitive microphone, an inductive microphone, or a piezoelectric microphone. A microphone can be used to detect noise emissions from the battery, which can be an indicator of internal pressure buildup and/or sparking.

### Cooling unit

The cooling unit 160 (optional) may serve for cooling the battery 101 when a risk of overheating and/or thermal runaway is detected by the control unit 140. In this case, the battery 101 may be disconnected from the battery connecting unit, and then be dropped, pushed, or otherwise moved into the cooling unit 160. In the shown embodiment, the cooling unit is a coolant fluid bath. The coolant fluid may be a cooling liquid. The coolant liquid may be water. Other coolant fluids may include cooling gases, like CO2 or N2, or dedicated heat-transfer fluids as e.g. sold by the Eastman Chemical Company under the name "THERMINOL". The coolant fluid bath may be a still bath, where the coolant fluid is not actively circulated or stirred. The coolant fluid bath may be a stirred bath, wherein the coolant fluid is stirred to improve thermal exchange between the coolant fluid and the battery. The coolant fluid bath may be a circulated bath, where the coolant fluid is actively circulated through a coolant fluid path, so that heated coolant fluid can cool down before contacting the battery again. The coolant fluid path may include a heat exchanger (not shown) for cooling the heated coolant fluid. Alternatively, a built-in cooling unit 161 (not shown) may be employed to cool the battery 101 during the discharge process, not only when a risk of overheating and/or thermal runaway is detected by the control unit 140. In this case, the battery 101 is still connected to the battery connecting unit, while the inlet and outlet of the built-in cooling system is connected to an external supply of coolant medium.

### Database

In the shown embodiment of the system 100, the control unit 140 is connected to an external database 150. The connection between the control unit 140 and the database 150 may be a network connection. The database may be hosted on a database server (not shown). The database server may be on-site. The database server may be an external database server. The external database server may be a cloud server. In an alternative embodiment, the database 150 may be integrated with the control unit 140.

In the database 150, characteristic data of a plurality of different battery types may be stored. For each battery type, a separate record may be provided in the database 150. The data in each record may comprise a unique battery type identifier, which may be an integer number assigned to every battery type known to the system 100. The data may comprise limits of safe operating conditions for every battery type. The data may comprise a nominal output voltage, a maximum allowable discharge current, a maximum allowable output power, and/or a maximum operating temperature of the battery type. The data may comprise identification data of the battery type. The identification data may include a transcription of a barcode or a QR-code placed on batteries of the respective battery type. The identification data may include a transcription of textual information placed on batteries of the respective battery type. The identification data may include geometrical data of batteries of the respective battery type. The battery identification data may be identical to the unique battery type identifier, or may be different from the unique battery type identifier.

### System of containers

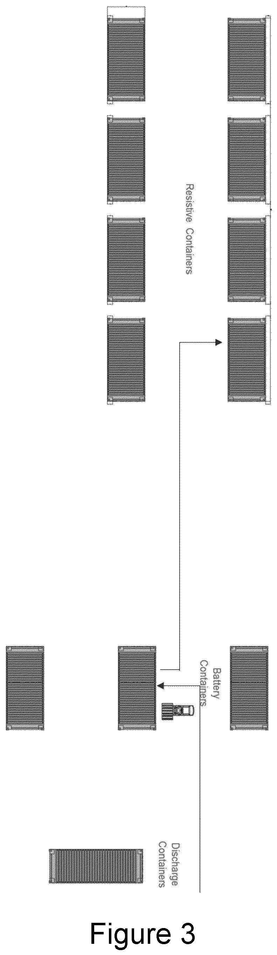

Figure 3 illustrates a system including a plurality of containers, according to an embodiment. First, battery containers where the battery packs to be discharged are placed (down to 0% SOC), which containers comprises temperature monitoring, physical separation and fire suppression. Upon reaching 0% SOC, Battery packs are transferred from battery containers to resistive containers. Resistive containers provide the final discharge, short circuit and resting (down to 0V), after which resting the battery is transferred to a next step in a recycling process, such as crushing/dismantling. Hence, the resistive containers act as a buffer for manual dismantling.

### Example discharge sequence

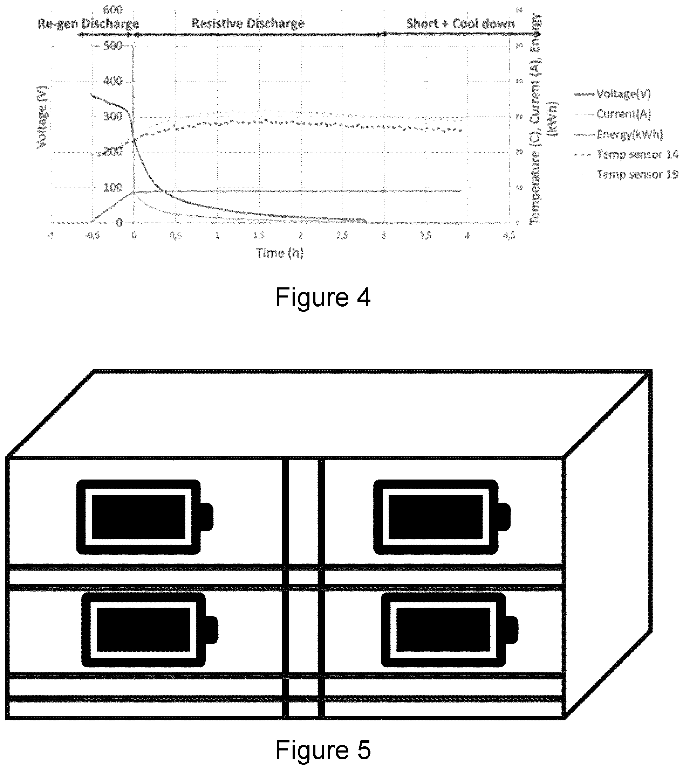

An example discharge sequence is illustrated in Figure 4. A BMW I3 discharge process is depicted, where the fist discharge process, the regenerative process (Re-gen discharge) is performed by applying an electronic load down to 250 V. The voltage curve can be seen to start between 300-400V, and drop down to 250 during this process. At the same time, the current drops down from 50 to 10A, while the accumulated energy after the first step is more or less constant.

The second discharge process according to a second method is carried out as two sub-steps. In a first sub-step, discharge is performed using a static resistive load down a remaining voltage of about 10 V (resistive discharge). After this, the battery is short circuited in a second sub-step of the second discharge process, after which the battery is allowed to cool down (short + cool down) before proceeding to the next step, such as crushing/dismantling.

### Battery Container

Figure 5 schematically illustrates a Battery Container, which may be used in the processes of the present disclosure. The Battery Container houses the battery packs to be discharged. The container is only for battery packs, no control and power electronics. It has side opening for easy access and insertion of the batteries to be discharged. Each battery container may have a number of positions, such as 4 positions as illustrated, i.e. 4 battery packs can be discharged in parallel. The containers are divided in two sections with 2 positions each. Each section are operated as separate batches, and the door to each section can be opened individually. Optionally, climatization of battery container is possible.

### Software

The steps of the processes may be controlled by software instructions running on the processing circuitry of the control unit 140. The software instructions may be stored in the memory device, and may be read by the processing circuitry for execution. The software instructions may be stored in the form of machine code, which can directly be executed by the processing circuitry. The software instructions may be stored in the form of a higher-level programming language, and may be translated into machine code in real time by an interpreter program executing on the processing circuitry. The software instructions may be provided separately from the control unit 140. The software instructions may be provided as a computer program product, distributed or offered for sale or licensing on a physical data-carrying element, like a CD, a DVD, or a USB stick. The computer program product may be distributed or offered for sale or licensing through a network service. The computer program product may be offered for download from a web server, a cloud server, or the like.

### Monitoring of first discharging method

In an example of the first discharge method, the process starts with providing a battery (101) to be discharged in step S2. The step S0 of providing the battery 101 may either be automatically controlled, or may be executed manually, or may be a combination of both. In step S21, an initial discharge current is applied to the battery 101. In an embodiment, the initial discharge current may be determined automatically by the control unit 140. Therefore, the control unit 140 may use battery identification means to acquire identification data from the battery, and may then access the database 150 for locating a record of a battery type with corresponding identification data. The control unit may then read a maximum allowable discharge current from the database 150, and may use this maximum allowable discharge current as initial discharge current.

In steps S22-S23, a status of the battery 101 is assessed. For assessment of the battery status, the control unit 140 acquires readings from the sensors 141, 142. In step S23, it is determined whether the battery status is indicating a low or moderate risk or thermal runaway, i.e., in a non-critical state. Therefore, the control unit 140 compares the sensor readings with data read from the database 150 to determine if the battery 101 is in a non-critical state (low risk of thermal runaway), a critical state (high risk of thermal runaway), or in transition from a non-critical state towards a critical state (moderate risk of thermal runaway).

The status of the battery 101 may be determined based on a battery temperature reading. The database 150 may contain data indicating a maximum temperature at which the battery 101 may be operated. The battery status may be considered as low risk if the battery temperature is below the maximum operating temperature, or below a predetermined safety margin under the maximum operating temperature. If e.g., the maximum operating temperature of the battery 101 is 60°C, the status of the battery 101 may be considered as low risk if the temperature is below a 5°C margin under the maximum temperature, i.e., below 55°C.

The status of the battery 101 may be determined based on a temperature change rate. An upper limit of an allowable temperature change rate may again be contained in the database 150. If a maximum allowable temperature change rate is e. g. 0.5°C per minute, the battery status may be considered as low risk if the battery temperature changes by 0.4°C per minute, but high risk if the temperature changes by 0.5°C per minute. Absolute battery temperature and temperature change rate may be considered in combination for assessing the battery status. The battery status may be considered as low risk if the battery temperature is close to the maximum allowable temperature, but is constant. In contrast, the battery may be considered to be in a transitional state if the battery temperature is below the maximum allowable temperature but increases with a high temperature change rate. Assessment of the battery status may involve estimating a time by when the battery temperature will reach the maximum allowable battery temperature, given the momentary battery temperature and battery temperature change rate. The battery status may be considered as indicating low risk if the estimated battery temperature will not reach the maximum allowable temperature within the next e. g. 10 minutes. The battery temperature used for the above assessments may be a surface temperature of the battery 101, as measured by a contacting or non-contacting temperature sensor. The battery temperature may also be a core temperature of the battery 101. A core temperature of the battery 101 may be measured by an internal temperature sensor 6 included in the battery 101. It must be considered though, that an internal temperature sensor 6 of the battery may be unreliable due to an unknown maintenance status of the battery 101. Another way to determine a core temperature of the battery 101 may include estimating the core temperature based on surface temperature, surface temperature change rate, battery thermal mass, battery heat dissipation characteristics, and electric parameters like battery output voltage and discharge current.

The status of the battery 101 may be determined based on an output voltage of the battery 101. The nominal output voltage of each battery is determined by the electrochemical design of the individual battery cells, and the combination of cells in the battery. For example, common Lithium-based batteries typically have nominal cell voltages around 3.5V. By serial connection of many cells, battery modules may provide output voltages of several 100V, e. g. 400V. Under load, the output voltage of a battery drops below the open circuit voltage. The chemical reactions in the battery as well as the internal resistance in the battery will cause a voltage drop and joule heating of the battery. The measured battery voltage together with the discharge current may be used to determine the losses and heating in the battery during the discharge, giving input for determine the risk of having a critical thermal event.

For instance, for each value of the discharge current applied to battery 101, a threshold of battery output voltage may be provided, and the battery status may be considered non-critical (low risk of thermal runaway) if the battery output voltage is above the threshold voltage, while the battery status may be considered transitional if the battery output voltage is below the threshold voltage.

Assessment of the battery status may include application of a multi-dimensional set of characteristic curves. A characteristic curve may include a curve of allowable discharge current over battery output voltage. A characteristic set of curves may include curves of allowable discharge currents over battery output voltage at different battery temperatures. A further set of characteristic curves may include curves of allowable discharge currents over battery output voltage at different battery temperature change rates.

Yet another set of characteristic curves may include curves of allowable discharge currents over battery output voltage at different battery temperatures and battery temperature change rates.

The optimal and safe discharge current for any battery depends on temperature, state of charge, state of health, age, battery cell chemistry, internal resistance, etc. The discharge current can be varied and optimized to avoid setting the battery in a critical state, while still discharging the battery as effectively as possible. For instance, as the battery is discharged close to 0% state of charge, the internal resistance increases which may lead to excessive heating of the battery cells and for that reason, the current can be tuned to control the battery temperature and avoid initializing any hazardous thermal event. In the present methods, the first discharge process may be terminated, and the second initiated once the battery has reached 0% state of charge.

The specific discharge curve chosen for each battery may be chosen depending on one or several input parameters, such as the above-mentioned temperature, state of charge, state of health, age, battery cell chemistry, internal resistance, etc.

Assessment of the battery status may involve determining shape characteristics and/or emission characteristics of the battery 101. Changes in battery shape may be determined through a vision system sensor. Emissions from battery 101 may also be determined by a vision system sensor, if the emissions involve fumes, smoke, sparks, or flames. Acoustical emissions from battery 101 may be detected by a microphone sensor. Shape changes or emissions from battery 101 will usually be an indicator for a critical battery state, which may require specific countermeasures, which will be described further below. If the battery status is indicating a low risk, the process continues with step S421, where the status of the battery is assessed again. If the status of the battery indicating a high risk, the process continues with step S423. After reaching 0% SOC, the first discharge process is terminated in step S31. The second discharge process, S4, is then initiated, and terminated in step In step S5, where it is determined in step S51whether the battery 101 has been discharged completely. If the battery 101 has been discharged completely, the process is terminated. It may include equipping the battery 101 with short circuit connectors, like a short circuit bracket, to avoid a rebound of battery voltage from causing problems during further processing. The battery 101 may then be subjected to an automated recycling process, which is not subject of this disclosure.

If the battery 101 has not been discharged completely, process is continued with step S242, where the discharge current is modified in a way to maintain the battery 101 in a non-critical state. Modification of the discharge current may be a reduction of the discharge current. The process is then continued with step S23, in which the status of the battery 101 is assessed again. After modification of the discharge current in step S242, a predetermined time may be allowed for settling of the battery 101 with the new discharge current. This may avoid erroneous status determinations caused by transient or time-lag behavior of battery output voltage, battery temperature, or sensor readings. The predetermined time may be in the range of seconds, e. g. 1 second, 2 seconds, 5 seconds, or 10 seconds, or in the range of minutes, e. g. 1 minute, 2 minutes, or 5 minutes.

If the evaluation in step S23 shows that the battery status is indicating a high risk, a further evaluation may be done. In this step, the status of the battery 101 is checked for parameters indicating a critical state of the battery 101. Such parameters may include, but are not limited to, maximum allowable battery temperature (without safety margin), maximum allowable battery temperature change rate, battery voltage change rate, and/or abnormal emission behavior of the battery, like acoustic emissions and/or emission of fumes, smoke, sparks, or flames. If a critical battery status is found, discharge current is disabled in step S243. By disabling the discharge current, further deterioration of the battery status may be avoided.

### Discharging processes

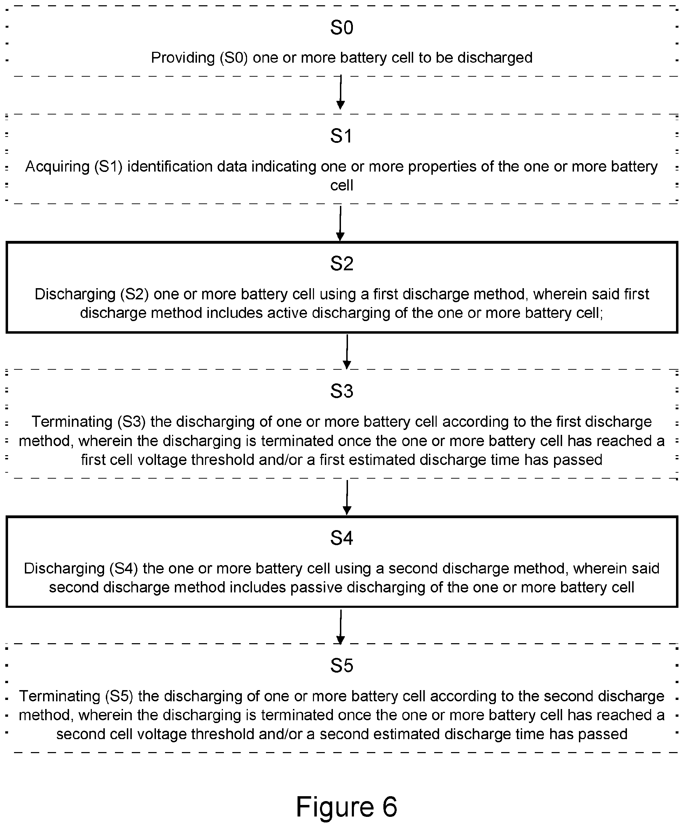

The proposed processes will now be described in more detail referring to Figures 6-8, illustrating a flowchart of a discharging process according to one possible embodiment of the invention. It should be appreciated that the figures comprise some operations which are illustrated with a solid border and some operations which are illustrated with a dashed border. The operations which are illustrated with solid border are operations which are comprised in the broadest example embodiment. The operations which are illustrated with dashed border are example embodiments which may be comprised in, or a part of, or are further embodiments which may be taken in addition to the operations of the broader example embodiments. It should be appreciated that the operations do not need to be performed in order. Furthermore, it should be appreciated that not all of the operations need to be performed.

Figure 6 illustrates a process for discharging of one or more rechargeable battery cell to be recycled, the method comprising providing (S0) one or more battery cell to be discharged; acquiring (S1) identification data indicating one or more properties of the one or more battery cell, discharging (S2) one or more battery cell using a first discharge method, wherein said first discharge method includes active discharging of the one or more battery cell; terminating (S3) the discharging of one or more battery cell according to the first discharge method, wherein the discharging is terminated once the one or more battery cell has reached a first cell voltage threshold and/or a first estimated discharge time has passed; discharging (S4) the one or more battery cell using a second discharge method, wherein said second discharge method includes passive discharging of the one or more battery cell; and terminating (S5) the discharging of one or more battery cell according to the second discharge method, wherein the discharging is terminated once the one or more battery cell has reached a second cell voltage threshold and/or a second estimated discharge time has passed.

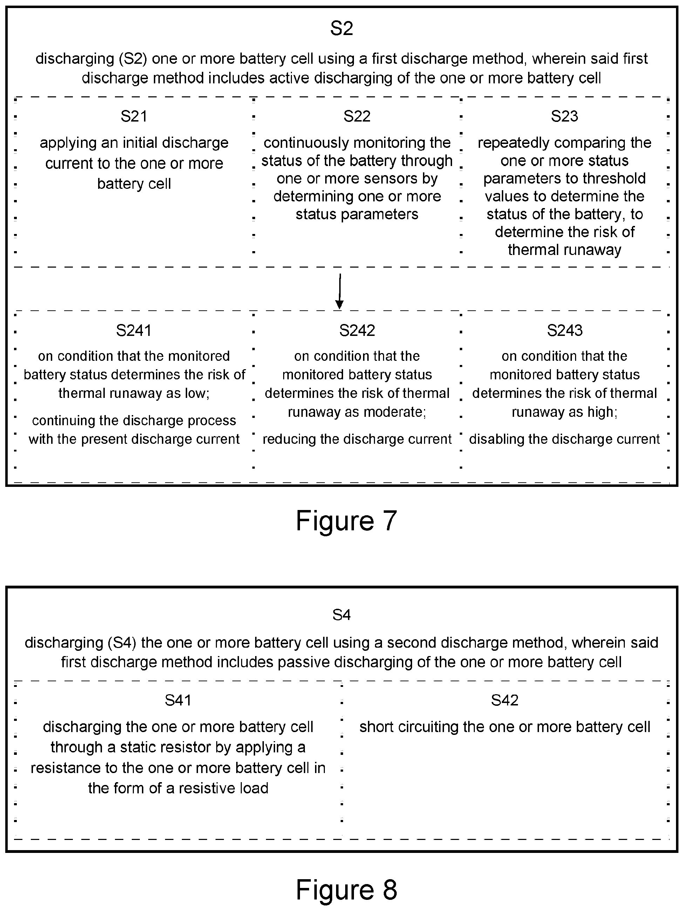

As illustrated in Figure 7, the step of discharging (S2) one or more battery cell using a first discharge method, wherein said first discharge method includes active discharging of the one or more battery cell comprises applying (S21) an initial discharge current to the one or more battery cell, continuously monitoring (S22) the status of the battery through one or more sensors by determining one or more status parameters, repeatedly comparing (S23) the one or more status parameters to threshold values to determine the status of the battery, to determine the risk of thermal runaway, and on condition that the monitored battery status determines the risk of thermal runaway as low, continuing (S241) the discharge process with the present discharge current, and on condition that the monitored battery status determines the risk of thermal runaway as moderate, reducing (S242) the discharge current, and on condition that the monitored battery status determines the risk of thermal runaway as high, disabling (S243) the discharge current.

As illustrated in Figure 8, the step of discharging (S4) the one or more battery cell using a second discharge method, wherein said first discharge method includes passive discharging of the one or more battery cell may include two sub-steps, a first sub-step of discharging (S41) the one or more battery cell through a static resistor by applying a resistance to the one or more battery cell in the form of an resistive load, and a second sub-step of short circuiting (S42) the one or more battery cell.

The content of this disclosure thus enables effective and high throughput discharging of batteries or battery cells, by splitting the discharging process into two distinct steps, a supervised active first discharge method, and a passive second discharge method.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of processes, products, and systems. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be realized in the broadest sense of the claims.

## Claims

1. A process for discharging of one or more rechargeable battery cell to be recycled, the process comprising:
discharging (S2) one or more battery cell using a first discharge method,
wherein said first discharge method includes active discharging of the one or more battery cell; and
discharging (S4) the one or more battery cell using a second discharge method, wherein said second discharge method includes passive discharging of the one or more battery cell, wherein the second discharge method is performed after the first discharge method.

2. The process according to claim 1, wherein the first discharge method includes subjecting the one or more battery cell to variable external influence to actively discharge the one or more battery cell.

3. The process according to claim 2, wherein subjecting the one or more battery cell to external influence includes subjecting the one or more battery cell to a discharge current, and wherein the first discharge method removes energy from the one or more battery cell, which energy is recovered using an AC/DC inverter or DC/DC converter.

4. The process according to claims 1-3, wherein the first discharge method includes continuously monitoring a status of a battery including the one or more battery cell through one or more sensors, wherein monitoring the status of the battery includes determining one or more status parameters, including determining at least one of output voltage, output voltage change rate, temperature, temperature change rate, shape of the battery, and/or emission behavior of the battery and/or wherein monitoring the status of the battery includes determining an age and/or charge level of the battery from the output voltage, output voltage change rate, temperature, and/or temperature change rate of the battery.

5. The process according to claim 3-4, wherein discharging (S2) one or more battery cell using a first discharge method comprises:
applying (S21) an initial discharge current to the one or more battery cell;
repeatedly monitoring (S22) the status of the battery through one or more sensors by determining one or more status parameters;
repeatedly comparing (S23) the one or more status parameters to threshold values to determine the status of the battery, to determine the risk of thermal runaway; and
on condition that the monitored battery status determines the risk of thermal runaway as low;
continuing (S241) the discharge process with the present discharge current;
on condition that the monitored battery status determines the risk of thermal runaway as moderate;
reducing (S242) the discharge current;
on condition that the monitored battery status determines the risk of thermal runaway as high;
disabling (S243) the discharge current.

6. The process according to any one of claims 1-5, wherein the second discharge method includes two separate sub steps, wherein the first sub step (S41) includes discharging the one or more battery cell through a static resistor by applying a resistance to the one or more battery cell in the form of an resistive load, and the second sub step (S42) includes short circuiting the one or more battery cell.

7. The process according to any one of claims 1-6, further comprising:
terminating (S3) the discharging of one or more battery cell according to the first discharge method, wherein the discharging is terminated once the one or more battery cell has reached a first voltage threshold and/or a first estimated discharge time has passed; and
terminating (S5) the discharging of one or more battery cell according to the second discharge method, wherein the discharging is terminated once the one or more battery cell has reached a second voltage threshold and/or a second estimated discharge time has passed.

8. The process according to claim 7, wherein the first voltage threshold corresponds to a state of charge (SOC) of 0% in the one or more battery cell, and the second voltage threshold corresponds to a cell voltage of 0-0,5 V of the one or more battery cell.

9. The process according to any one of claims 1-8, wherein the discharging (S2) one or more battery cell using a first discharge method is carried out in a first container and the discharging (S4) the one or more battery cell using a second discharge method is carried out in a second container different from the first container, wherein the first container is a battery container and the second container is a resistive container.

10. The process according to any one of claims 1-9, further comprising:
providing (S0) one or more battery cell to be discharged; and
acquiring (S1) identification data indicating one or more properties of the one or more battery cell.

11. The process according to any one of the previous claims, wherein the one or more battery cell is present in a battery module, and/or wherein the one or more battery cell is present in a battery module which is present in a battery pack.

12. The process according to claims 7-11, wherein terminating (S3) the discharging of one or more battery cell according to the first discharge method, wherein the discharging is terminated once the one or more battery cell has reached a first voltage threshold and/or a first estimated discharge time has passed comprises:
continuously monitoring (S31) the remaining cell or pack voltage of the one or more battery cell or battery pack; and
on condition that the voltage validation shows that the remaining cell or pack voltage is above the first voltage threshold,
continuing (S32A) the first discharging process;
on condition that the remaining cell or pack voltage is at or below the first voltage threshold,
moving (S32B) the or more battery cell from the first container to the second container; and
wherein terminating (S5) the discharging of one or more battery cell according to the second discharge method, wherein the discharging is terminated once the one or more battery cell or pack has reached a second voltage threshold and/or a second estimated discharge time has passed comprises:
performing (S51) a voltage validation of remaining cell or pack voltage of the one or more battery cell or pack by measuring the remaining cell or pack voltage of the one or more battery cell or pack, wherein said voltage validation may be performed after the second estimated discharge time has passed; and
on condition that the voltage validation shows that the remaining cell voltage is above the second voltage threshold,
continuing (S52B) the second discharging process;
on condition that the voltage validation shows that the remaining cell or pack voltage is at or below the second voltage threshold,
sending (S52B) the one or more battery cell to a next step in a battery cell recycling process.

13. A system (100) for discharging of one or more rechargeable battery cell to be recycled, comprising one or more battery containers, one or more resistive containers, one or more battery discharging means and one or more control unit, wherein the control unit is configured to control the battery discharging means to execute a process according to any of claims 1 to 18 for one or more battery cell provided to the system.

14. The system according to claim 13, wherein the control unit comprises processing circuitry and a memory device connected to the processing circuitry, and further comprising one or more of: one or more sensors for monitoring a status of a battery comprising the one or more battery cell, battery identification means and a database connected to the control unit, the database storing characterizing data of one or more battery types to be provided to the system.

15. Computer program product, comprising a set of machine-readable instructions stored on a volatile or non-volatile medium, which, when read and subsequently executed by a processing circuitry of a system according to any of claims 13-14, cause the system to execute a process according to any of claims 1-12.

## Amended claims

### Amended claims in accordance with Rule 137(2) EPC.

1. A process for discharging of one or more rechargeable battery cell to be recycled, the process comprising:
discharging (S2) one or more battery cell using a first discharge method, wherein said first discharge method includes active discharging of the one or more battery cell, wherein the first discharge method includes subjecting the one or more battery cell to variable external influence to actively discharge the one or more battery cell; and
discharging (S4) the one or more battery cell using a second discharge method, wherein said second discharge method includes passive discharging of the one or more battery cell, wherein the second discharge method comprises a constant resistive load to passively discharge the one or more battery cell, and wherein the second discharge method is performed after the first discharge method.

2. The process according to claim 1, wherein subjecting the one or more battery cell to external influence includes subjecting the one or more battery cell to a discharge current, and wherein the first discharge method removes energy from the one or more battery cell, which energy is recovered using an AC/DC inverter or DC/DC converter.

3. The process according to claims 1-2, wherein the first discharge method includes continuously monitoring a status of a battery including the one or more battery cell through one or more sensors, wherein monitoring the status of the battery includes determining one or more status parameters, including determining at least one of output voltage, output voltage change rate, temperature, temperature change rate, shape of the battery, and/or emission behavior of the battery and/or wherein monitoring the status of the battery includes determining an age and/or charge level of the battery from the output voltage, output voltage change rate, temperature, and/or temperature change rate of the battery.

4. The process according to claim 2-3, wherein discharging (S2) one or more battery cell using a first discharge method comprises:
applying (S21) an initial discharge current to the one or more battery cell;
repeatedly monitoring (S22) the status of the battery through one or more sensors by determining one or more status parameters;
repeatedly comparing (S23) the one or more status parameters to threshold values to determine the status of the battery, to determine the risk of thermal runaway; and
on condition that the monitored battery status determines the risk of thermal runaway as low;
continuing (S241) the discharge process with the present discharge current; on condition that the monitored battery status determines the risk of thermal runaway as moderate;
reducing (S242) the discharge current;
on condition that the monitored battery status determines the risk of thermal runaway as high;
disabling (S243) the discharge current.

5. The process according to any one of claims 1-4, wherein the second discharge method includes two separate sub steps, wherein the first sub step (S41) includes discharging the one or more battery cell through a static resistor by applying a resistance to the one or more battery cell in the form of an resistive load, and the second sub step (S42) includes short circuiting the one or more battery cell.

6. The process according to any one of claims 1-5, further comprising:
terminating (S3) the discharging of one or more battery cell according to the first discharge method, wherein the discharging is terminated once the one or more battery cell has reached a first voltage threshold and/or a first estimated discharge time has passed; and
terminating (S5) the discharging of one or more battery cell according to the second discharge method, wherein the discharging is terminated once the one or more battery cell has reached a second voltage threshold and/or a second estimated discharge time has passed.

7. The process according to claim 6, wherein the first voltage threshold corresponds to a state of charge (SOC) of 0% in the one or more battery cell, and the second voltage threshold corresponds to a cell voltage of 0-0,5 V of the one or more battery cell.

8. The process according to any one of claims 1-7, wherein the discharging (S2) one or more battery cell using a first discharge method is carried out in a first container and the discharging (S4) the one or more battery cell using a second discharge method is carried out in a second container different from the first container, wherein the first container is a battery container and the second container is a resistive container.

9. The process according to any one of claims 1-8, further comprising:
providing (S0) one or more battery cell to be discharged; and
acquiring (S1) identification data indicating one or more properties of the one or more battery cell.

10. The process according to any one of the previous claims, wherein the one or more battery cell is present in a battery module, and/or wherein the one or more battery cell is present in a battery module which is present in a battery pack.

11. The process according to claims 7-10, wherein terminating (S3) the discharging of one or more battery cell according to the first discharge method, wherein the discharging is terminated once the one or more battery cell has reached a first voltage threshold and/or a first estimated discharge time has passed comprises:
continuously monitoring (S31) the remaining cell or pack voltage of the one or more battery cell or battery pack; and
on condition that the voltage validation shows that the remaining cell or pack voltage is above the first voltage threshold,
continuing (S32A) the first discharging process;
on condition that the remaining cell or pack voltage is at or below the first voltage threshold,
moving (S32B) the or more battery cell from the first container to the second container; and
wherein terminating (S5) the discharging of one or more battery cell according to the second discharge method, wherein the discharging is terminated once the one or more battery cell or pack has reached a second voltage threshold and/or a second estimated discharge time has passed comprises:
performing (S51) a voltage validation of remaining cell or pack voltage of the one or more battery cell or pack by measuring the remaining cell or pack voltage of the one or more battery cell or pack, wherein said voltage validation may be performed after the second estimated discharge time has passed; and
on condition that the voltage validation shows that the remaining cell voltage is above the second voltage threshold,
continuing (S52B) the second discharging process;
on condition that the voltage validation shows that the remaining cell or pack voltage is at or below the second voltage threshold,
sending (S52B) the one or more battery cell to a next step in a battery cell recycling process.

12. A system (100) for discharging of one or more rechargeable battery cell to be recycled, comprising one or more battery containers, one or more resistive containers, one or more battery discharging means and one or more control unit, wherein the control unit is configured to control the battery discharging means to execute a process according to any of claims 1 to 11 for one or more battery cell provided to the system.

13. The system according to claim 12, wherein the control unit comprises processing circuitry and a memory device connected to the processing circuitry, and further comprising one or more of: one or more sensors for monitoring a status of a battery comprising the one or more battery cell, battery identification means and a database connected to the control unit, the database storing characterizing data of one or more battery types to be provided to the system.

14. Computer program product, comprising a set of machine-readable instructions stored on a volatile or non-volatile medium, which, when read and subsequently executed by a processing circuitry of a system according to any of claims 12-13, cause the system to execute a process according to any of claims 1-11.
